(19) Europäisches Patentamt / European Patent Office / Office européen des brevets

(11) **EP 2 753 097 B1**

(12) **EUROPEAN PATENT SPECIFICATION**

(45) Date of publication and mention of the grant of the patent:
**04.01.2017 Bulletin 2017/01**

(21) Application number: **12870326.1**

(22) Date of filing: **29.11.2012**

(51) Int Cl.:
*H04Q 11/00* *(2006.01)*

(86) International application number:
**PCT/CN2012/085581**

(87) International publication number:
**WO 2014/082267 (05.06.2014 Gazette 2014/23)**

(54) **SCHEDULING METHOD, DEVICE AND SYSTEM**

PLANUNGSVERFAHREN, -VORRICHTUNG UND -SYSTEM

PROCÉDÉ, DISPOSITIF ET SYSTÈME DE PLANIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.07.2014 Bulletin 2014/28**

(73) Proprietor: **Huawei Technologies Co., Ltd.**
**Longgang District**
**Shenzhen, Guangdong 518129 (CN)**

(72) Inventor: **LIU, Lin**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**WO-A1-2005/002276      WO-A2-95/32599**
**CN-A- 1 602 078      CN-A- 1 820 537**
**CN-A- 101 110 652      US-A1- 2006 209 816**
**US-B1- 7 492 760**

## Description

### TECHNICAL FIELD

The present invention relates to the field of data transmission technologies, and in particular, to a scheduling method, apparatus and system.

### BACKGROUND

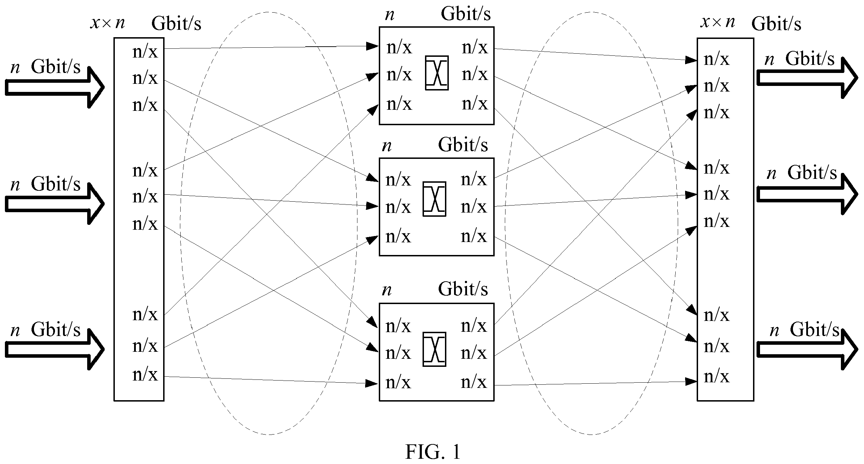

A model for scheduling commonly used in an existing wavelength division system equipment is as shown in FIG. 1, a service particle, such as an asynchronous transfer mode (Asynchronous Transfer Mode, ATM for short) signal, a plesiochronous digital hierarchy (Plesiochronous Digital Hierarchy, PDH for short) signal, and a data service, first accesses a first service access unit to undergo photoelectric conversion and frame processing, and then is encapsulated in a cross particle, the cross particle enters a cross unit and is scheduled to a second service access unit at a peer end, where the service particle is randomly scheduled between ports at two ends of the first service access unit and the second service access unit. During implementation, the existing technical solution is specifically as shown in FIG. 1. Assume that a bandwidth of each cross unit in the system is $n$ Gbit/s and a maximum cross side bandwidth of the first service access unit is $nx$ Gbit/s, the cross unit is divided into x lines, thereby implementing the random scheduling between the ports of the first service access unit and the second service access unit, where x is the maximum number of access services of the first service access unit, or in other words, is a maximum value of a ratio of a maximum service access bandwidth of the first service access unit to a scheduling bandwidth of a single cross unit; however, as shown by a dashed block in FIG. 1, this kind of cross relationship is fixed and unchanged, and when the actual number of access services of the first service access unit is less than the maximum number x of access services, a waste of a cross bandwidth is caused. For example, the maximum number of access services of the entire scheduling system is 3, and when only 1 line of service is accessed in the scheduling system, a utilization rate of the cross bandwidth is only one third.

WO 2005/002276 A1 discloses a switching network that forms part of a digital cross-connect for connecting data frames between requested inputs and outputs, and includes an input stage, an intermediate stage, and an output stage, each of which consists of a plurality of switching matrices. Each input stage switching matrix has a link, indicated generally by the reference, to each intermediate stage switching matrix and each intermediate stage switching matrix has a link, indicated generally by the reference, to each output stage switching matrix.

US 7 492 760 B1 discloses a method of time division multiplex switching which reduces the implementation area by reducing the area required for both memory storage at each egress port and the multiplexing circuitry required.

### SUMMARY

Embodiments of the present invention provide a scheduling method, apparatus and system, which may improve a utilization rate of a cross bandwidth, save a line resource of a cross unit, and reduce power consumption and a cost of scheduling.

A first aspect of the present invention provides a scheduling method, which may include:

setting a first cross matrix between a first service access unit and cross units, and setting a second cross matrix between the cross units and a second service access unit;
configuring a line cross relationship for the first cross matrix according to the maximum use number and the actual use number of the cross units and the actual number of service accesses of the first service access unit; and
configuring a line cross relationship of the second cross matrix according to the line cross relationship of the first cross matrix, so that the line cross relationship of the second cross matrix is symmetric to the line cross relationship of the first cross matrix;

wherein before the configuring a line cross relationship for the first cross matrix according to the maximum use number of cross units, the actual use number of the cross units and the actual number of service accesses of the first service access unit, the method further comprises:

obtaining the maximum use number of the cross units, that is, the maximum number of service accesses of the first service access unit, according to a maximum access bandwidth of the first service access unit and a scheduling bandwidth of a single cross unit, wherein

the maximum use number of the cross units, that is, the maximum number of service accesses of the first service access unit, is calculated through the following formula:

$$x = z / n$$

wherein, x is the maximum use number of the cross units, that is, the maximum number of service accesses of the first service access unit, z is the maximum access bandwidth of the first service access unit, and n is the scheduling bandwidth of a single cross unit; and

setting $\beta$ lines for each cross unit, wherein a bandwidth of each line is $n / \beta$, and $\beta$ is a least common multiple of all numerals from 1 to x;

wherein the configuring a line cross relationship for the first cross matrix according to the maximum use number and the actual use number of the cross units and the actual number of service accesses of the first service access unit comprises:

configuring $m_2\beta$ groups of line cross relationships for the first cross matrix, wherein the line cross relationship of the first cross matrix is calculated through the following formula:

$$\left[k_1\beta + k_2 m_1 + k_3, (k_3 - 1)\beta + k_1 y + k_2 + 1\right]$$

wherein, $y = \beta / m_1$ , $k_1$=0,1...($m_2$-1), $k_2$=0,1...(y-1), $k_3$=1,2...$m_1$; and
$m_1$ is the actual use number of the cross units, and $m_2$ is the actual number of service accesses of the first service access unit; and

the configuring a line cross relationship for the second cross matrix, comprises: the line cross relationship of the second cross matrix is calculated through the following formula:

$$\left[(k_3 - 1)\beta + k_1 y + k_2 + 1, k_1\beta + k_2 m_1 + k_3\right].$$

A second aspect of the present invention provides a scheduling apparatus, which may include:

a cross matrix setting module, configured to set a first cross matrix between a first service access unit and cross units, and set a second cross matrix between the cross units and a second service access unit; and
a cross relationship configuring module, configured to configure a line cross relationship for the first cross matrix according to the maximum use number and the actual use number of the cross units and the actual number of service accesses of the first service access unit; and configure a line cross relationship of the second cross matrix according to the line cross relationship of the first cross matrix, so that the line cross relationship of the second cross matrix is symmetric to the line cross relationship of the first cross matrix;
a cross unit configuring module, configured to obtain the maximum use number of the cross units, that is, the maximum number of service accesses of the first service access unit, according to a maximum access bandwidth of the first service access unit and a scheduling bandwidth of a single cross unit, wherein
the maximum use number of the cross units, that is, the maximum number of service accesses of the first service access unit, is calculated through the following formula:

$$x = z / n$$

wherein, x is the maximum use number of the cross units, that is, the maximum number of service accesses of the first service access unit, z is the maximum access bandwidth of the first service access unit, and n is the scheduling bandwidth of a single cross unit; and
set $\beta$ lines for each cross unit, wherein a bandwidth of each line is $n / \beta$, and $\beta$ is a least common multiple of all numerals from 1 to x;

wherein the cross relationship configuring module is further configured to:

configure $m_2\beta$ groups of line cross relationships for the first cross matrix, wherein the line cross relationship of the first cross matrix is calculated through the following formula:

$$\left[ k_1\beta + k_2 m_1 + k_3, (k_3 - 1)\beta + k_1 y + k_2 + 1 \right]$$

wherein, $y = \beta / m_1$, $k_1=0,1...(m_2-1)$, $k_2=0,1...(y-1)$, $k_3=1,2,...m_1$; and
$m_1$ is the actual use number of the cross units, and $m_2$ is the actual number of service accesses of the first service access unit; and

configure a line cross relationship for the second cross matrix, wherein
the line cross relationship of the second cross matrix is calculated through the following formula:

$$\left[ (k_3 - 1)\beta + k_1 y + k_2 + 1, k_1\beta + k_2 m_1 + k_3 \right].$$

A third aspect of the present invention provides a scheduling apparatus, which may include:

a processor and a storage matched with the processor, where
the storage is configured to store a program executed by the processor; and

the processor is configured to execute the following steps:

setting a first cross matrix between a first service access unit and cross units, and setting a second cross matrix between the cross units and a second service access unit;
configuring a line cross relationship for the first cross matrix according to the maximum use number and the actual use number of the cross units and the actual number of service accesses of the first service access unit; and
configuring a line cross relationship of the second cross matrix according to the line cross relationship of the first cross matrix, so that the line cross relationship of the second cross matrix is symmetric to the line cross relationship of the first cross matrix;

wherein the processor is further configured to:

obtain the maximum use number of the cross units, that is, the maximum number of service accesses of the first service access unit, according to a maximum access bandwidth of the first service access unit and a scheduling bandwidth of a single cross unit, wherein
the maximum use number of the cross units, that is, the maximum number of service accesses of the first service access unit, is calculated through the following formula:

$$x = z / n$$

wherein, x is the maximum use number of the cross units, that is, the maximum number of service accesses of the first service access unit, z is the maximum access bandwidth of the first service access unit, and n is the scheduling bandwidth of a single cross unit; and
set $\beta$ lines for each cross unit, wherein a bandwidth of each line is $n / \beta$, and $\beta$ is a least common multiple of all numerals from 1 to x;

wherein the processor is further configured to:
configure $m_2\beta$ groups of line cross relationships for the first cross matrix, wherein the line cross relationship of the first cross matrix is calculated through the following formula:

$$\left[ k_1\beta + k_2 m_1 + k_3, (k_3 - 1)\beta + k_1 y + k_2 + 1 \right]$$

wherein, $y = \beta / m_1$, $k_1=0,1...(m_2-1)$, $k_2=0,1...(y-1)$, $k_3=1,2...m_1$; and
$m_1$ is the actual use number of the cross units, and $m_2$ is the actual number of service accesses of the first service access unit; and

configure a line cross relationship for the second cross matrix, wherein
the line cross relationship of the second cross matrix is calculated through the following formula:

$$\left[ (k_3 - 1)\beta + k_1 y + k_2 + 1, k_1 \beta + k_2 m_1 + k_3 \right].$$

A fourth aspect of the present invention provides a scheduling system, which may include:

a first service access unit, configured to receive a service;
a cross unit, configured to schedule the service received by the first service access unit;
a second service access unit, configured to receive the service scheduled by the cross unit; and
the scheduling apparatus as described in the foregoing.

Implementation of the embodiments of the present invention has the following beneficial effects:

By setting the first cross matrix between the first service access unit and the cross units and setting the second cross matrix between the second service access unit and the cross units, and by performing cross corresponding of lines through the first cross matrix and the second cross matrix, the entire scheduling system may adaptively select, according to the actual number of service accesses of the first service access unit, fewest cross units to complete service scheduling, thereby improving the utilization rate of the cross bandwidth, saving the line resource of the cross units, and reducing the power consumption and the cost of the scheduling.

**BRIEF DESCRIPTION OF DRAWINGS**

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.

FIG. 1 is a schematic diagram of scheduling of an existing scheduling model;
FIG. 2 is a schematic flow chart of a first embodiment of a scheduling method according to the present invention;
FIG. 3 is a schematic flow chart of a second embodiment of a scheduling method according to the present invention;
FIG. 4 is a schematic flow chart of a third embodiment of a scheduling method according to the present invention;
FIG. 5 is a schematic flow chart of a first embodiment of a scheduling apparatus according to the present invention;
FIG. 6 is a schematic flow chart of a second embodiment of a scheduling apparatus according to the present invention;
FIG. 7 is a schematic flow chart of a third embodiment of a scheduling apparatus according to the present invention; and
FIG. 8 is a schematic composition diagram of a scheduling system according to an embodiment of the present invention.

**DESCRIPTION OF EMBODIMENTS**

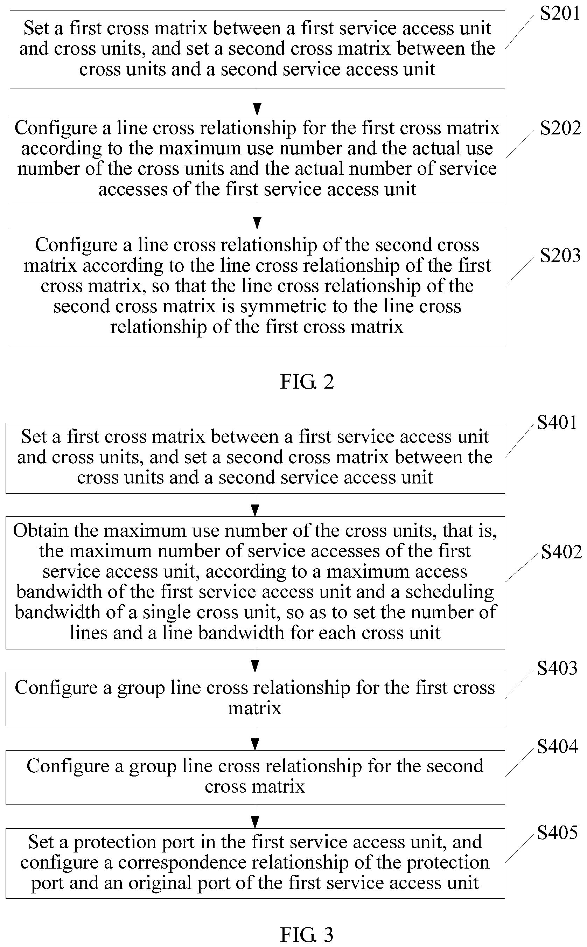

The following clearly and completely describes the technical solutions in the embodiments of the present invention with reference to the accompanying drawings in the embodiments of the present invention. Apparently, the embodiments to described are merely a part rather than all of the embodiments of the present invention. All other embodiments obtained by a person of ordinary skill in the art based on the embodiments of the present invention without making creative efforts shall fall within the protection scope of the present invention.
Referring to FIG. 2, a schematic flow chart of a first embodiment of a scheduling method according to the present invention is shown; in this embodiment, the method includes the following steps:

S201: Set a first cross matrix between a first service access unit and cross units, and set a second cross matrix between the cross units and a second service access unit.
S202: Configure a line cross relationship for the first cross matrix according to the maximum use number and the actual use number of the cross units and the actual number of service accesses of the first service access unit.

Generally, for a given scheduling system, it may be determined according to a maximum access bandwidth of the first service access unit and a scheduling bandwidth of a single cross unit. A suitable line cross relationship is set in combination with the actual use number of the cross units and the actual number of service accesses of the first service access unit.

S203: Configure a line cross relationship of the second cross matrix according to the line cross relationship of the first cross matrix, so that the line cross relationship of the second cross matrix is symmetric to the line cross relationship of the first cross matrix.

By adopting the method described in this embodiment, by configuring the cross matrix, lines of the first service access unit may be enabled to adaptively connect to corresponding lines of cross units at a peer end of the cross matrix according to the actual number of service accesses of the first service access unit, and the cross unit and the second service access unit complete a symmetric connection, thereby implementing service scheduling; in this procedure, a bandwidth of a working cross unit is utilized to a maximum extent, thereby saving the use number of the cross units, and implementing optimization of a scheduling cost and power consumption.

Referring to FIG. 3, a schematic flow chart of a second embodiment of a scheduling method according to the present invention is shown; in this embodiment, the method includes:

> S301: Set a first cross matrix between a first service access unit and cross units, and set a second cross matrix between the cross units and a second service access unit.
> S302: Obtain the maximum use number of the cross units, that is, the maximum number of service accesses of the first service access unit, according to a maximum access bandwidth of the first service access unit and a scheduling bandwidth of a single cross unit, so as to set the number of lines and a line bandwidth for each cross unit.

Specifically, the maximum use number of the cross units, that is, the maximum number of service accesses of the first service access unit, is calculated through the following formula:

$$x = z / n$$

where, x is the maximum use number of the cross units, that is, the maximum number of service accesses of the first service access unit, z is the maximum access bandwidth of the first service access unit, and n is the scheduling bandwidth of a single cross unit.

$\beta$ lines are set for each cross unit, and a bandwidth of each line is $n / \beta$, where $\beta$ is a least common multiple of all numerals from 1 to x. Line bandwidths at two sides of the cross matrix are each $n / \beta$ as well, and therefore, minimization of a bandwidth particle is implemented.

S303: Configure a line cross relationship for the first cross matrix.

Specifically, configure $m_2\beta$ groups of line cross relationships for the first cross matrix, where the line cross relationship of the first cross matrix is calculated through the following formula:

$$\left[ k_1\beta + k_2 m_1 + k_3, (k_3 - 1)\beta + k_1 y + k_2 + 1 \right]$$

where, $y = \beta / m$, $0 \leq k_1 \leq m_2 - 1$, $0 \leq k_2 \leq y - 1$, and $1 \leq k_3 \leq m_1$; and $m_1$ is the actual use number of the cross units, and $m_2$ is the actual number of service accesses of the first service access unit.

More specifically, it may be first kept that $k_1 = 0$ and $k_2 = 0$, and $k_3$ starts traversing from 1 to $m_1$, so a first group of $m_1$ line cross relationships for a first line may be obtained:

$$\left[ 1,1 \right], \quad \left[ 2, 1 + \beta \right] ... \quad \left[ m, (m-1)\beta + 1 \right];$$

If it is kept that $k_1 = 0$ and $k_2 = 1$, and $k_3$ starts traversing from 1 to $m_1$, a second group of $m_1$ line cross relationships for the first line may be obtained;
Likewise, if it is kept that $k_1 = 0$, $k_2$ starts traversing from 1 to $y - 1$, and $k_3$ starts traversing from 1 to $m_1$, all y groups of $m_1 y$ line cross relationships for the first line may be obtained; if $k_1$ starts traversing from 0 to $m_2 - 1$, $k_2$ starts traversing

from 0 to $y$ -1, and $k_3$ starts traversing from 1 to $m_1$, $y$ groups of $m_1$ line cross relationships for an $m_2$ line may be obtained, so that $m_1 m_2 y$ line cross relationships are finally obtained comprehensively. Because $y = \beta / m_1$, $m_2\beta$ line cross relationships are obtained finally.

All $m_2\beta$ line cross relationships in the entire first cross matrix may be obtained through the foregoing calculation. Then, a corresponding line cross relationship is selected according to the actual use number of the cross units and the actual number of service accesses of the first service access unit, so as to perform service scheduling.

S304: Configure a line cross relationship for the second cross matrix.

The line cross relationship of the second cross matrix is calculated through the following formula:

$$\left[ (k_3 - 1)\beta + k_1 y + k_2 + 1, k_1\beta + k_2 m_1 + k_3 \right]$$

where, $y = \beta/m_1$, $0 \le k_1 \le m_2 - 1$, $0 \le k_2 \le y - 1$, and $1 \le k_3 \le m_1$.

A calculation of the second cross matrix is similar to that of the first cross matrix, and is not repeatedly described herein.

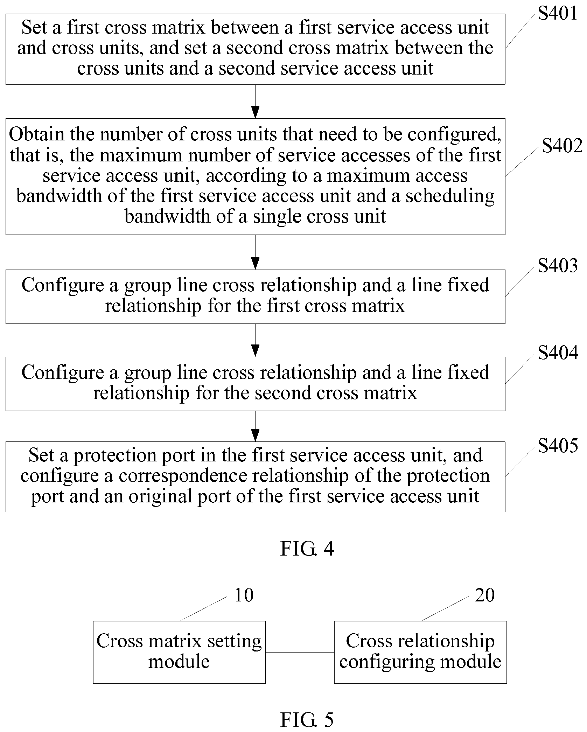

Referring to FIG. 4, a schematic flow chart of a third embodiment of a scheduling apparatus according to the present invention is shown; in this embodiment, the method includes the following steps:

S401: Set a first cross matrix between a first service access unit and cross units, and set a second cross matrix between the cross units and a second service access unit.

S402: Obtain the maximum use number of the cross units, that is, the maximum number of service accesses of the first service access unit, according to a maximum access bandwidth of the first service access unit and a scheduling bandwidth of a single cross unit, so as to set the number of lines and a line bandwidth for each cross unit.

It should be noted that, if line bandwidths of the cross units cannot meet a scheduling requirement, the number of lines of the cross units may also be increased, so as to ensure that a scheduling bandwidth of each cross unit remains unchanged.

Definitely, if a single line service bandwidth of the first service access unit is greater than the scheduling bandwidth of the single cross unit, the number of lines of the first cross matrix may also be reduced to simplify the line cross relationship.

In addition, if the single line service bandwidth of the first service access unit is $a \le n / 2$, $\lfloor n / a \rfloor$ lines of services access one cross unit for configuring a line cross relationship, where, n is the scheduling bandwidth of the single cross unit. Here, $\lfloor n / a \rfloor$ represents that $n / a$ is rounded down. For example, when $n / a$ is 2, in this case, the scheduling bandwidth of the single cross unit is twice the single line service bandwidth of the first service access unit, so two lines of services may access one cross unit for configuring a line cross relationship; when $n / a$ is 3, in this case, the scheduling bandwidth of the single cross unit is three times the single line service bandwidth of the first service access unit, so three lines of services may access one cross unit for configuring a line cross relationship; when $n / a$ is 3.5, in this case, the scheduling bandwidth of the single cross unit is more than three times but less than four times the single line service bandwidth of the first service access unit, so only three lines of services can access one cross unit for configuring a line cross relationship.

S403: Configure a group line cross relationship for the first cross matrix.

S404: Configure a group line cross relationship for the second cross matrix.

S405: Set a protection port in the first service access unit, and configure a correspondence relationship of the protection port and an original port of the first service access unit.

Through step S405, a standby line selection is provided for the entire service scheduling, and when a certain line fails, the service scheduling may still be performed normally by adopting the method, thereby improving reliability and fault tolerance of the service scheduling.

Referring to FIG. 5, a schematic flow chart of a first embodiment of a scheduling apparatus according to the present invention is shown; in this embodiment, the apparatus includes: a cross matrix setting module 10 and a cross relationship configuring module 20.

The cross matrix setting module 10 is configured to set a first cross matrix between a first service access unit and cross units, and set a second cross matrix between the cross units and a second service access unit.

The cross relationship configuring module 20 is configured to configure a line cross relationship for the first cross matrix according to the maximum use number and the actual use number of the cross units and the actual number of service accesses of the first service access unit; and configure a line cross relationship of the second cross matrix according to the line cross relationship of the first cross matrix, so that the line cross relationship of the second cross matrix is symmetric to the line cross relationship of the first cross matrix.

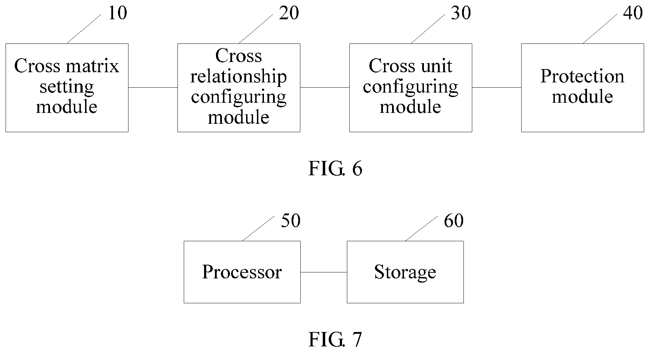

Referring to FIG. 6, a schematic flow chart of a second embodiment of a scheduling apparatus according to the present invention is shown; in this embodiment, the apparatus includes: a cross matrix setting module 10, a cross relationship configuring module 20, a cross unit configuring module 30, and a protection module 40.

The cross unit configuring module 30 is configured to obtain the maximum use number of cross units, that is, the maximum number of service accesses of a first service access unit, according to a maximum access bandwidth of the first service access unit and a scheduling bandwidth of a single cross unit, where

the maximum use number of the cross units, that is, the maximum number of service accesses of the first service access unit, is calculated through the following formula:

$$x = z / n$$

where, x is the maximum use number of the cross units, that is, the maximum number of service accesses of the first service access unit, z is the maximum access bandwidth of the first service access unit, and n is the scheduling bandwidth of the single cross unit; and

set $\beta$ lines for each cross unit, where a bandwidth of each line is $n / \beta$, and $\beta$ is a least common multiple of all numerals from 1 to x.

The cross relationship configuring module 20 is further configured to:

configure $m_2\beta$ groups of line cross relationships for the first cross matrix, where the line cross relationship of the first cross matrix is calculated through the following formula:

$$\left[ k_1\beta + k_2 m_1 + k_3, (k_3 - 1)\beta + k_1 y + k_2 + 1 \right]$$

where, $y = \beta/m_1$, $0 \le k_1 \le m_2 - 1$, $0 \le k_2 \le y - 1$, and $1 \le k_3 \le m_1$ ; and

$m_1$ is the actual use number of the cross units, and $m_2$ is the actual number of service accesses of the first service access unit; and

configure a line cross relationship for the second cross matrix, where

the line cross relationship of the second cross matrix is calculated through the following formula:

$$\left[ (k_3 - 1)\beta + k_1 y + k_2 + 1, k_1\beta + k_2 m_1 + k_3 \right]$$

where, $y = \beta / m_1$, $0 \le k_1 \le m_2 - 1$, $0 \le k_2 \le y-1$, and $1 \le k_3 \le m_1$.

The cross unit configuring module 30 is further configured to:

if line bandwidths of the cross units cannot meet a scheduling requirement, increase the number of lines of the cross units, so as to ensure that a scheduling bandwidth of each cross unit remains unchanged.

The protection module 40 is configured to set a protection line in the first service access unit, and configure a correspondence relationship of the protection line and an original line of the first service access unit.

The cross relationship configuring module 20 is further configured to, if a single line service bandwidth of the first service access unit is $a \le n/2$, connect $\lfloor n /a \rfloor$ lines of services to one cross unit for configuring a line cross relationship, where, n is the scheduling bandwidth of the single cross unit. Here, $\lfloor n / a \rfloor$ represents that $n/a$ is rounded down. For example, when $n/a$ is 2, in this case, the scheduling bandwidth of the single cross unit is twice the single line service bandwidth of the first service access unit, so two lines of services may access one cross unit for configuring a line cross relationship; when $n/a$ is 3, in this case, the scheduling bandwidth of the single cross unit is three times the single line service bandwidth of the first service access unit, so three lines of services may access one cross unit for configuring a line cross relationship; when $n/a$ is 3.5, in this case, the scheduling bandwidth of the single cross unit is more than three times but less than four times the single line service bandwidth of the first service access unit, so only three lines of services can access one cross unit for configuring a line cross relationship.

Referring to FIG. 7, a schematic flow chart of a third embodiment of a scheduling apparatus according to the present invention is shown; in this embodiment, the apparatus includes: a processor 50 and a storage 60 matched with the processor 50.

The storage 60 is configured to store a program executed by the processor 50.

The processor 50 is configured to execute the following steps:

setting a first cross matrix between a first service access unit and cross units, and setting a second cross matrix between the cross units and a second service access unit;

configuring a line cross relationship for the first cross matrix according to the maximum use number and the actual use number of the cross units and the actual number of service accesses of the first service access unit; and

configuring a line cross relationship of the second cross matrix according to the line cross relationship of the first cross matrix, so that the line cross relationship of the second cross matrix is symmetric to the line cross relationship of the first cross matrix.

The processor 50 is further configured to:

obtain the maximum use number of the cross units, that is, the maximum number of service accesses of the first service access unit, according to a maximum access bandwidth of the first service access unit and a scheduling bandwidth of a single cross unit, where

the maximum use number of the cross units, that is, the maximum number of service accesses of the first service access unit, is calculated through the following formula:

$$x = z / n$$

where, x is the maximum use number of the cross units, that is, the maximum number of service accesses of the first service access unit, z is the maximum access bandwidth of the first service access unit, and n is the scheduling bandwidth of the single cross unit; and

set $\beta$ lines for each cross unit, where a bandwidth of each line is $n / \beta$, and $\beta$ is a least common multiple of all numerals from 1 to x.

The processor 50 is further configured to:

configure $m_2\beta$ groups of line cross relationships for the first cross matrix, where the line cross relationship of the first cross matrix is calculated through the following formula:

$$\left[k_1\beta + k_2 m_1 + k_3, (k_3 - 1)\beta + k_1 y + k_2 + 1\right]$$

where, $y = \beta / m_1$, $0 \le k_1 \le m_2 - 1$, $0 \le k_2 \le y - 1$, and $1 \le k_3 \le m_1$; and

$m_1$ is the actual use number of the cross units, and $m_2$ is the actual number of service accesses of the first service access unit; and

configure a line cross relationship for the second cross matrix, where

the line cross relationship of the second cross matrix is calculated through the following formula:

$$\left[(k_3 - 1)\beta + k_1 y + k_2 + 1, k_1\beta + k_2 m_1 + k_3\right]$$

where, $y = \beta/m_1$, $0 \le k_1 \le m_2 - 1$, $0 \le k_2 \le y - 1$, and $1 \le k_3 \le m_1$.

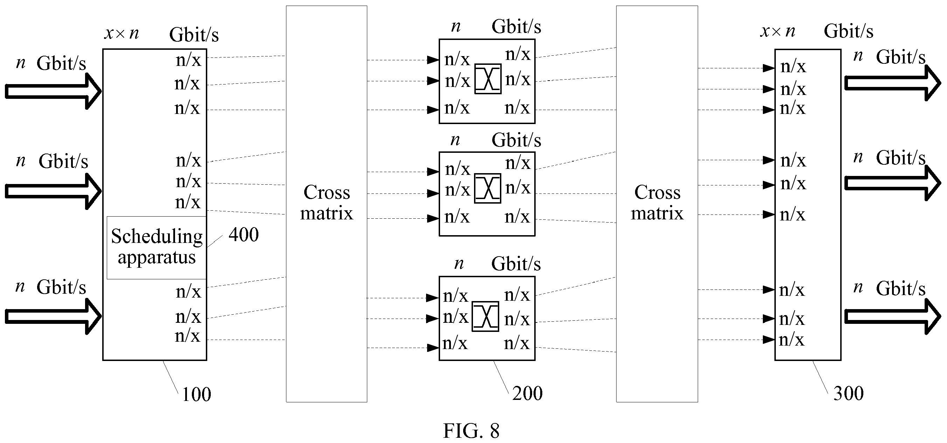

Referring to FIG. 8, a schematic composition diagram of a scheduling system according to an embodiment of the present invention is shown. In this embodiment, the system includes: a first service unit 100, a cross unit 200, a second service access unit 300, and a scheduling apparatus 400 as described in the foregoing.

The first service access unit 100 is configured to receive a service.

The cross unit 200 is configured to schedule the service received by the first service access unit.

The second service access unit 300 is configured to receive the service scheduled by the cross unit.

The scheduling apparatus 400 may be integrated in the first service access unit 100, the cross unit 200, or the second service access unit 300; and may also be disposed separately.

By taking a certain typical wavelength division scheduling system as an example, a maximum service access capacity of a first service access unit of the scheduling system is 16 x 9.953 Gbit/s, a maximum service access bandwidth at its cross side is 160 Gbit/s, a scheduling bandwidth of a single cross unit is 40 Gbit/s, access capacities configured by the scheduling system are, in ascending order, 1 x 39.813 Gbit/s, corresponding to a cross side bandwidth of 40 Gbit/s; 2 x 39.813 Gbit/s, corresponding to a cross side bandwidth of 80 Gbit/s; 30 x 2.488 Gbit/s, corresponding to a cross side bandwidth of 80 Gbit/s; 111.81 Gbit/s, corresponding to a cross side bandwidth of 120 Gbit/s; and 16 x 9.953Gbit/s, corresponding to a cross side bandwidth of 160 Gbit/s.

According to the scheduling method of the present invention, the maximum use number of cross units of the scheduling system, that is, the maximum number of service accesses of the first service access unit is x=160/40=4. Because the least common multiple from 1 to 4 is 4, each cross unit is designed with 12 lines, and a bandwidth of each link is 40/12, that is 3.33 Gbit/s.

First, 4 cross units are configured for the scheduling system, when a maximum access capacity of the first service access unit in the scheduling system is 16 x 9.953 Gbit/s, corresponding to the cross side bandwidth of 160 Gbit/s, the maximum use number of the cross units of the scheduling system, that is, the maximum number of service accesses of the first service access unit is x=160/40=4. Because the least common multiple from 1 to 4 is 4, each cross unit is designed with 12 lines; assume that the actual use number of the cross units in the scheduling system is m=x=4, the 12 lines are divided into y=12/4=3 groups.

That is, in this case, $m_1$ = 4, $\beta$ = **12**, $y$ = **3**. The actual number of service accesses is $m_2$ = **1** .

According to the formula $[(k_3 - 1)\beta + k_1 y + k_2 + 1, k_1\beta + k_2 m + k_3]$, a traversing calculation may be performed by taking $0 \le k_1 \le m_2 - 1$, $0 \le k_2 \le y - 1$, and $1 \le k_3 \le m_1$, so as to obtain cross correspondence relationships of the lines as follows: [1,1], [2,13], [3,25], [4,37], [5,2], [6,14], [7,26], [8,38], [9,3], [10,15], [11,27], [12,39].

When the maximum access capacity of the first service access unit in the scheduling system is 2 x 39.813 Gbit/s, obtain $m_1$ = 2, $\beta$ = 12, $y$ = 6, $m_2$ =1 according to the foregoing calculation method.

According to the formula $[(k_3-1)\beta + k_1 y + k_2 + 1, k_1\beta + k_2 m + k_3]$, a traversing calculation may be performed by taking $0 \le k_1 \le m_2$ **-1**, $0 \le k_2 \le y$-1, and $1 \le k_3 \le m_1$, so as to obtain cross correspondence relationships of the lines as follows: [1,1], [2,13], [3,2], [4,14], [5,3], [6,15], [7,4], [8,16], [9,5], [10,17], [11,6], [12,18].

When the maximum access capacity of the first service access unit in the scheduling system is 1 x 39.813 Gbit/s, obtain $m_1$ = 1, $\beta$ = 12, $y$ =12, $m_2$ =1 according to the foregoing calculation method. According to the formula $[(k_3 -1)\beta + k_1 y + k_2 + 1, k_1\beta + k_2 m + k_3]$, a traversing calculation may be performed by taking $0 \le k_1 \le m_2$ **- 1**, **0** $\le k_2 \le y$ **- 1**, and $1 \le k_3 \le m_1$ , so as to obtain cross correspondence relationships of the lines as follows: [1,1], [2,2], [3,3], [4,4], [5,5], [6,6], [7,7], [8,8], [9,9], [10,10], [11,11], [12,12].

The second cross matrix and the first cross matrix are disposed symmetrically, and details are not repeatedly described herein.

The first cross matrix and the second cross matrix may be implemented by a logic such as a cross chip, a circuit, and software, the scheduling system may automatically determine the number of first service access units to switch a corresponding line cross relationship, and by performing switching at a frame header, lossless switch may be achieved to implement smooth upgrade.

According to the description of the foregoing embodiments, the present invention has the following advantages:

By setting the first cross matrix between the first service access unit and the cross unit and setting the second cross matrix between the second service access unit and the cross unit, and by performing cross corresponding of lines through the first cross matrix and the second cross matrix, the entire scheduling system may adaptively select, according to the actual number of service accesses of the first service access unit, fewest cross units to complete service scheduling, thereby improving a utilization rate of a cross bandwidth, saving a line resource of a cross unit, and reducing power consumption and a cost of scheduling.

A person of ordinary skill in the art may understand that all or a part of the processes of the methods in the foregoing embodiments may be implemented by a computer program instructing relevant hardware. The program may be stored in a computer readable storage medium. When the program runs, the processes of the foregoing methods in the embodiments are performed. The storage medium may be a magnetic disk, an optical disk, a read-only memory (Read-Only Memory, ROM for short), or a random access memory (Random Access Memory, RAM for short), or the like.

The foregoing disclosures are only exemplary embodiments of the present invention, and certainly, are not intended to limit the scope of the claims of the present invention. Any equivalent variation made according to the claims of the present invention shall fall within the protection scope of the present invention.

**Claims**

1. A scheduling method, comprising:

   setting (S201) a first cross matrix between a first service access unit and cross units, and setting a second cross matrix between the cross units and a second service access unit;

   **characterized by** further comprising:

   configuring (S202) a line cross relationship for the first cross matrix according to the maximum use number of cross units, the actual use number of the cross units and the actual number of service accesses of the first service access unit; and
   configuring (S203) a line cross relationship of the second cross matrix according to the line cross relationship of the first cross matrix, wherein the line cross relationship of the second cross matrix is symmetric to the line cross relationship of the first cross matrix;

   wherein before the configuring a line cross relationship for the first cross matrix according to the maximum use number of cross units, the actual use number of the cross units and the actual number of service accesses of the first service access unit, the method further comprises:

   obtaining (S402) the maximum use number of the cross units, that is, the maximum number of service accesses of the first service access unit, according to a maximum access bandwidth of the first service access unit and a scheduling bandwidth of a single cross unit, wherein
   the maximum use number of the cross units, that is, the maximum number of service accesses of the first service access unit, is calculated through the following formula:

$$x = z / n$$

   wherein, x is the maximum use number of the cross units, that is, the maximum number of service accesses of the first service access unit, z is the maximum access bandwidth of the first service access unit, and n is the scheduling bandwidth of a single cross unit; and
   setting $\beta$ lines for each cross unit, wherein a bandwidth of each line is $n / \beta$, and $\beta$ is a least common multiple of all numerals from 1 to x;

   wherein the configuring a line cross relationship for the first cross matrix according to the maximum use number and the actual use number of the cross units and the actual number of service accesses of the first service access unit comprises:

   configuring $m_2\beta$ groups of line cross relationships for the first cross matrix, wherein the line cross relationship of the first cross matrix is calculated through the following formula:

$$\left[k_1\beta + k_2 m_1 + k_3, (k_3 - 1)\beta + k_1 y + k_2 + 1\right]$$

   wherein, $y = \beta / m_1$, $k_1 = 0, 1 ... (m_2-1)$, $k_2 = 0, 1 ... (y-1)$, $k_3 = 1, 2 ... m_1$; and
   $m_1$ is the actual use number of the cross units, and $m_2$ is the actual number of service accesses of the first service access unit; and

   the configuring a line cross relationship for the second cross matrix, comprises: the line cross relationship of the second cross matrix is calculated through the following formula:

$$\left[(k_3 - 1)\beta + k_1 y + k_2 + 1, k_1\beta + k_2 m_1 + k_3\right].$$

2. The scheduling method according to claim 1, wherein:

if line bandwidths of the cross units cannot meet a scheduling requirement, the number of lines of the cross units is increased, so as to ensure that a scheduling bandwidth of each cross unit remains unchanged; and a protection port is configured in the first service access unit, and a correspondence relationship of the protection port and an original port of the first service access unit is configured.

3. The scheduling method according to claim 1 or 2, wherein if a single line service bandwidth of the first service access unit $a \leq n / 2$, $\lfloor n^* / a \rfloor$ lines of services access one cross unit for configuring a line cross relationship, wherein $\lfloor n / a \rfloor$ represents the maximum integer that is less than or equal to n/a.

4. A scheduling apparatus, comprising:

a cross matrix setting module (10), configured to set a first cross matrix between a first service access unit and cross units, and set a second cross matrix between the cross units and a second service access unit; and

**characterized by** further comprising:

a cross relationship configuring module (20), configured to configure a line cross relationship for the first cross matrix according to the maximum use number of cross units, the actual use number of the cross units and the actual number of service accesses of the first service access unit; and configure a line cross relationship of the second cross matrix according to the line cross relationship of the first cross matrix, wherein the line cross relationship of the second cross matrix is symmetric to the line cross relationship of the first cross matrix;
a cross unit configuring module (30), configured to obtain the maximum use number of the cross units, that is, the maximum number of service accesses of the first service access unit, according to a maximum access bandwidth of the first service access unit and a scheduling bandwidth of a single cross unit, wherein
the maximum use number of the cross units, that is, the maximum number of service accesses of the first service access unit, is calculated through the following formula:

$$x = z / n$$

wherein, x is the maximum use number of the cross units, that is, the maximum number of service accesses of the first service access unit, z is the maximum access bandwidth of the first service access unit, and n is the scheduling bandwidth of a single cross unit; and
set $\beta$ lines for each cross unit, wherein a bandwidth of each line is $n/\beta$, and $\beta$ is a least common multiple of all numerals from 1 to x;

wherein the cross relationship configuring module is further configured to:

configure $m_2\beta$ groups of line cross relationships for the first cross matrix, wherein the line cross relationship of the first cross matrix is calculated through the following formula:

$$\left[ k_1\beta + k_2 m_1 + k_3, (k_3 - 1)\beta + k_1 y + k_2 + 1 \right]$$

wherein, $y = \beta / m_1$, $k_1 = 0,1... (m_2\text{-}1)$, $k_2 = 0,1... (y\text{-}1)$, $k_3 = 1,2 ... m_1$; and
$m_1$ is the actual use number of the cross units, and $m_2$ is the actual number of service accesses of the first service access unit; and

configure a line cross relationship for the second cross matrix, wherein
the line cross relationship of the second cross matrix is calculated through the following formula:

$$\left[ (k_3 - 1)\beta + k_1 y + k_2 + 1, k_1\beta + k_2 m_1 + k_3 \right].$$

5. The scheduling apparatus according to claim 4, wherein the cross unit configuring module is further configured to:

if line bandwidths of the cross units cannot meet a scheduling requirement, increase the number of lines of the cross units, so as to ensure that a scheduling bandwidth of each cross unit remains unchanged; and
the scheduling apparatus further comprises: a protection module (40), configured to set a protection line in the first service access unit, and configure a correspondence relationship of the protection line and an original line of the first service access unit.

6. The scheduling apparatus according to claim 4 or 5, wherein the cross relationship configuring module is further configured to, if a single line service bandwidth of the first service **P 44953/EP** access unit $a \leq n / 2$, connect $\llcorner n/a \lrcorner$ lines of services to one cross unit for configuring a line cross relationship, wherein $\llcorner n/a \lrcorner$ represents the maximum integer that is less than or equal to n/a.

7. A scheduling apparatus, comprising:

   a processor (50) and a storage (60) matched with the processor, wherein
   the storage is configured to store a program executed by the processor; and
   the processor is configured to execute the following steps:

   setting a first cross matrix between a first service access unit and cross units, and setting a second cross matrix between the cross units and a second service access unit;

   **characterized by** further comprising:

   configuring a line cross relationship for the first cross matrix according to the maximum use number of cross units, the actual use number of the cross units and the actual number of service accesses of the first service access unit; and
   configuring a line cross relationship of the second cross matrix according to the line cross relationship of the first cross matrix, wherein the line cross relationship of the second cross matrix is symmetric to the line cross relationship of the first cross matrix;

   wherein the processor is further configured to:

   obtain the maximum use number of the cross units, that is, the maximum number of service accesses of the first service access unit, according to a maximum access bandwidth of the first service access unit and a scheduling bandwidth of a single cross unit, wherein
   the maximum use number of the cross units, that is, the maximum number of service accesses of the first service access unit, is calculated through the following formula:

$$x = z / n$$

   wherein, x is the maximum use number of the cross units, that is, the maximum number of service accesses of the first service access unit, z is the maximum access bandwidth of the first service access unit, and n is the scheduling bandwidth of a single cross unit; and
   set $\beta$ lines for each cross unit, wherein a bandwidth of each line is $n/\beta$, and $\beta$ is a least common multiple of all numerals from 1 to x;

   wherein the processor is further configured to:

   configure $m_2\beta$ groups of line cross relationships for the first cross matrix, wherein the line cross relationship of the first cross matrix is calculated through the following formula:

$$\left[ k_1\beta + k_2 m_1 + k_3, (k_3 - 1)\beta + k_1 y + k_2 + 1 \right]$$

   wherein, $y = \beta / m_1$, $k_1 = 0,1...(m_2-1)$, $k_2 = 0,1...(y-1)$, $k_3 = 1,2...m_1$; and
   $m_1$ is the actual use number of the cross units, and $m_2$ is the actual number of service accesses of the first service access unit; and

configure a line cross relationship for the second cross matrix, wherein
the line cross relationship of the second cross matrix is calculated through the following formula:

$$\left[(k_3 - 1)\beta + k_1 y + k_2 + 1, k_1 \beta + k_2 m_1 + k_3\right].$$

8. A scheduling system, comprising:

   a first service access unit, configured to receive a service;
   a cross unit, configured to schedule the service received by the first service access unit;
   a second service access unit, configured to receive the service scheduled by the cross unit; and

   **characterized by** further comprising:

   the scheduling apparatus according to any one of claims 4 to 7.

9. The scheduling system according to claim 8, wherein the scheduling apparatus is integrated in the first service access unit, the cross unit, or the second service access unit; or
   is disposed separately.


**Patentansprüche**

1. Planungsverfahren, aufweisend:

   Einstellen (S201) einer ersten Kreuzmatrix zwischen einer ersten Dienstzugriffseinheit und Kreuzeinheiten und Einstellen einer zweiten Kreuzmatrix zwischen den Kreuzeinheiten und einer zweiten Dienstzugriffseinheit;

   **dadurch gekennzeichnet, dass** es des Weiteren aufweist:

   Konfigurieren (S202) eines Leitungskreuzungsverhältnisses für die erste Kreuzmatrix gemäß der maximalen Verwendungszahl von Kreuzeinheiten, der tatsächlichen Verwendungszahl der Kreuzeinheiten und der tatsächlichen Zahl von Dienstzugriffen der ersten Dienstzugriffseinheit; und
   Konfigurieren (S203) eines Leitungskreuzungsverhältnisses der zweiten Kreuzmatrix gemäß dem Leitungskreuzungsverhältnis der ersten Kreuzmatrix, wobei das Leitungskreuzungsverhältnis der zweiten Kreuzmatrix zum Leitungskreuzungsverhältnis der ersten Kreuzmatrix symmetrisch ist;

   wobei vor dem Konfigurieren eines Leitungskreuzungsverhältnisses für die erste Kreuzmatrix gemäß der maximalen Verwendungszahl von Kreuzeinheiten, der tatsächlichen Verwendungszahl der Kreuzeinheiten und der tatsächlichen Zahl von Dienstzugriffen der ersten Dienstzugriffseinheit, das Verfahren des Weiteren aufweist:

   Erhalten (S402) der maximalen Verwendungszahl der Kreuzeinheiten, das heißt, der maximalen Anzahl von Dienstzugriffen der ersten Dienstzugriffseinheit, gemäß einer maximalen Zugriffsbandbreite der ersten Dienstzugriffseinheit und einer Planungsbandbreite einer einzelnen Kreuzeinheit, wobei die maximale Verwendungszahl der Kreuzeinheiten, das heißt, die maximale Anzahl von Dienstzugriffen der ersten Dienstzugriffseinheit, durch die folgende Formel berechnet wird:

   $$x = z / n$$

   wobei x die maximale Verwendungszahl der Kreuzeinheiten ist, das heißt, die maximale Anzahl von Dienstzugriffen der ersten Dienstzugriffseinheit, z die maximale Zugriffsbandbreite der ersten Dienstzugriffseinheit ist und n die Planungsbandbreite einer einzelnen Kreuzeinheit ist; und

   Einstellen von β Leitungen für jede Kreuzeinheit, wobei eine Bandbreite jeder Leitung n/β ist und β ein kleinstes gemeinsames Vielfaches aller Zahlen von 1 bis x ist; wobei das Konfigurieren eines Leitungskreuzungsverhältnisses für die erste Kreuzmatrix gemäß der maximalen Verwendungszahl und der tatsächlichen Verwendungszahl der Kreuzeinheiten und der tatsächlichen Zahl von Dienstzugriffen der ersten Dienstzugriffseinheit aufweist:

Konfigurieren von $m_2\beta$ Gruppen von Leitungskreuzungsverhältnissen für die erste Kreuzmatrix, wobei das Leitungskreuzungsverhältnis der ersten Kreuzmatrix durch die folgende Formel berechnet wird:

$$[k_1\beta+k_2m_1+k_3,(k_3-1)\ \beta+k_1y+k_2+1]$$

wobei $y = \beta/m_1$, $k_1 = 0,1... (m_2-1)$, $k_2 = 0,1... (y-1)$, $k_3 = 1,2 ... m_1$; und
$m_1$ die tatsächliche Verwendungszahl der Kreuzeinheiten ist und $m_2$ die tatsächliche Zahl von Dienstzugriffen der ersten Dienstzugriffseinheit ist; und

das Konfigurieren eines Leitungskreuzungsverhältnisses für die zweite Kreuzmatrix aufweist: das Leitungskreuzungsverhältnis der zweiten Kreuzmatrix wird durch die folgende Formel berechnet:

$$[(k_3-1)\beta+k_1y+k_2+1, k_1\beta+k_2m_1+k_3].$$

**2.** Planungsverfahren nach Anspruch 1, wobei:

wenn Leitungsbandbreiten der Kreuzeinheiten eine Planungsanforderung nicht erfüllen können, die Anzahl von Leitungen der Kreuzeinheiten erhöht wird, so dass sichergestellt ist, dass eine Planungsbandbreite jeder Kreuzeinheit unverändert bleibt; und
ein Schutzanschluss in der ersten Dienstzugriffseinheit konfiguriert ist und ein Entsprechungsverhältnis des Schutzanschlusses und eines ursprünglichen Anschlusses der ersten Dienstzugriffseinheit konfiguriert ist.

**3.** Planungsverfahren nach Anspruch 1 oder 2, wobei, wenn eine einzelne Leitungsdienstbandbreite der ersten Dienstzugriffseinheit $a \le n/2$, $\llcorner n/a \lrcorner$ Dienstleitungen auf eine Kreuzeinheit zum Konfigurieren eines Leitungskreuzungsverhältnisses zugreifen, wobei $\llcorner n/a \lrcorner$ die maximale ganze Zahl darstellt, die kleiner oder gleich $n/a$ ist.

**4.** Planungsvorrichtung, aufweisend:

ein Kreuzmatrixeinstellungsmodul (10), das zum Einstellen einer ersten Kreuzmatrix zwischen einer ersten Dienstzugriffseinheit und Kreuzeinheiten und Einstellen einer zweiten Kreuzmatrix zwischen den Kreuzeinheiten und einer zweiten Dienstzugriffseinheit konfiguriert ist; und

**dadurch gekennzeichnet, dass** sie des Weiteren aufweist:

ein Kreuzverhältniskonfigurierungsmodul (20), das zum Konfigurieren eines Leitungskreuzungsverhältnisses für die erste Kreuzmatrix gemäß der maximalen Verwendungszahl von Kreuzeinheiten, der tatsächlichen Verwendungszahl der Kreuzeinheiten und der tatsächlichen Zahl von Dienstzugriffen der ersten Dienstzugriffseinheit; und Konfigurieren eines Leitungskreuzungsverhältnisses der zweiten Kreuzmatrix gemäß dem Leitungskreuzungsverhältnis der ersten Kreuzmatrix konfiguriert ist, wobei das Leitungskreuzungsverhältnis der zweiten Kreuzmatrix zum Leitungskreuzungsverhältnis der ersten Kreuzmatrix symmetrisch ist;
ein Kreuzeinheitenkonfigurierungsmodul (30), das zum Erhalten der maximalen Verwendungszahl der Kreuzeinheiten, das heißt, der maximalen Anzahl von Dienstzugriffen der ersten Dienstzugriffseinheit, gemäß einer maximalen Zugriffsbandbreite der ersten Dienstzugriffseinheit und einer Planungsbandbreite einer einzelnen Kreuzeinheit konfiguriert ist, wobei
die maximale Verwendungszahl der Kreuzeinheiten, das heißt, die maximale Anzahl von Dienstzugriffen der ersten Dienstzugriffseinheit, durch die folgende Formel berechnet wird:

$$x = z / n$$

wobei $x$ die maximale Verwendungszahl der Kreuzeinheiten ist, das heißt, die maximale Anzahl von Dienstzugriffen der ersten Dienstzugriffseinheit, $z$ die maximale Zugriffsbandbreite der ersten Dienstzugriffseinheit ist und $n$ die Planungsbandbreite einer einzelnen Kreuzeinheit ist; und

Einstellen von β Leitungen für jede Kreuzeinheit, wobei eine Bandbreite jeder Leitung n/β ist, und β ein kleinstes gemeinsames Vielfaches aller Zahlen von 1 bis x ist;

wobei das Kreuzverhältniskonfigurierungsmodul des Weiteren konfiguriert ist zum:

Konfigurieren von $m_2\beta$ Gruppen von Leitungskreuzungsverhältnissen für die erste Kreuzmatrix, wobei das Leitungskreuzungsverhältnis der ersten Kreuzmatrix durch die folgende Formel berechnet wird:

$$[k_1\beta+k_2m_1+k_3,(k_3-1)\beta+k_1y+k_2+1]$$

wobei $y = \beta/m_1$, $k_1 = 0,1...(m_2-1)$, $k_2= 0,1...(y-1)$, $k_3 = 1,2...m_1$; und
$m_1$ die tatsächliche Verwendungszahl der Kreuzeinheiten ist und $m_2$ die tatsächliche Zahl von Dienstzugriffen der ersten Dienstzugriffseinheit ist; und
Konfigurieren eines Leitungskreuzungsverhältnisses für die zweite Kreuzmatrix, wobei
das Leitungskreuzungsverhältnis der zweiten Kreuzmatrix durch die folgende Formel berechnet wird:

$$[(k_3-1)\beta+k_1y+k_2+1, k_1\beta+k_2m_1+k_3].$$

5. Planungsvorrichtung nach Anspruch 4, wobei das Kreuzeinheitskonfigurierungsmodul des Weiteren konfiguriert ist zum:

wenn Leitungsbandbreiten der Kreuzeinheiten eine Planungsanforderung nicht erfüllen können, Erhöhen der Anzahl von Leitungen der Kreuzeinheiten, so dass sichergestellt ist, dass eine Planungsbandbreite jeder Kreuzeinheit unverändert bleibt; und
die Planungsvorrichtung des Weiteren aufweist: ein Schutzmodul (40), das zum Einstellen einer Schutzleitung in der ersten Dienstzugriffseinheit und zum Konfigurieren eines Entsprechungsverhältnisses der Schutzleitung und einer ursprünglichen Leitung der ersten Dienstzugriffseinheit konfiguriert ist.

6. Planungsvorrichtung nach Anspruch 4 oder 5, wobei, wenn eine einzelne Leitungsdienstbandbreite der ersten Dienstzugriffseinheit $a \leq n/2$ ist, das Kreuzverhältniskonfigurierungsmodul des Weiteren konfiguriert ist zum Verbinden von $\lfloor n/a \rfloor$ Dienstleitungen mit einer Kreuzeinheit zum Konfigurieren eines Leitungskreuzungsverhältnisses, wobei $\lfloor n/a \rfloor$ die maximale ganze Zahl darstellt, die kleiner oder gleich n/a ist.

7. Planungsvorrichtung, aufweisend:

einen Prozessor (50) und einen mit dem Prozessor abgestimmten Speicher (60), wobei der Speicher zum Speichern eines Programms konfiguriert ist, das vom Prozessor ausgeführt wird; und

der Prozessor zum Ausführen der folgenden Schritte konfiguriert ist:

Einstellen einer ersten Kreuzmatrix zwischen einer ersten Dienstzugriffseinheit und Kreuzeinheiten und Einstellen einer zweiten Kreuzmatrix zwischen den Kreuzeinheiten und einer zweiten Dienstzugriffseinheit;

**dadurch gekennzeichnet, dass** sie des Weiteren aufweist:

Konfigurieren eines Leitungskreuzungsverhältnisses für die erste Kreuzmatrix gemäß der maximalen Verwendungszahl von Kreuzeinheiten, der tatsächlichen Verwendungszahl der Kreuzeinheiten und der tatsächlichen Zahl von Dienstzugriffen der ersten Dienstzugriffseinheit; und
Konfigurieren eines Leitungskreuzungsverhältnisses der zweiten Kreuzmatrix gemäß dem Leitungskreuzungsverhältnis der ersten Kreuzmatrix, wobei das Leitungskreuzungsverhältnis der zweiten Kreuzmatrix zum Leitungskreuzungsverhältnis der ersten Kreuzmatrix symmetrisch ist;

wobei der Prozessor des Weiteren konfiguriert ist zum:

Erhalten der maximalen Verwendungszahl der Kreuzeinheiten, das heißt, der maximalen Anzahl von Dienstzugriffen der ersten Dienstzugriffseinheit, gemäß einer maximalen Zugriffsbandbreite der ersten Dienstzugriffseinheit und einer Planungsbandbreite einer einzelnen Kreuzeinheit, wobei die maximale Verwendungszahl der Kreuzeinheiten, das heißt, die maximale Anzahl von Dienstzugriffen der ersten Dienstzugriffseinheit, durch die folgende Formel berechnet wird:

$$x = z / n$$

wobei x die maximale Verwendungszahl der Kreuzeinheiten ist, das heißt, die maximale Anzahl von Dienstzugriffen der ersten Dienstzugriffseinheit, z die maximale Zugriffsbandbreite der ersten Dienstzugriffseinheit ist und n die Planungsbandbreite einer einzelnen Kreuzeinheit ist; und

Einstellen von $\beta$ Leitungen für jede Kreuzeinheit, wobei eine Bandbreite jeder Leitung $n/\beta$ ist und $\beta$ ein kleinstes gemeinsames Vielfaches aller Zahlen von 1 bis x ist;

wobei der Prozessor des Weiteren konfiguriert ist zum:

Konfigurieren von $m_2\beta$ Gruppen von Leitungskreuzungsverhältnissen für die erste Kreuzmatrix, wobei das Leitungskreuzungsverhältnis der ersten Kreuzmatrix durch die folgende Formel berechnet wird:

$$[k_1\beta+k_2m_1+k_3,(k_3-1)\beta+k_1y+k_2+1]$$

wobei $y = \beta/m_1$, $k_1 = 0,1...(m_2-1)$, $k_2= 0,1...(y-1)$, $k_3 = 1,2...m_1$; und $m_1$ die tatsächliche Verwendungszahl der Kreuzeinheiten ist und $m_2$ die tatsächliche Zahl von Dienstzugriffen der ersten Dienstzugriffseinheit ist; und
Konfigurieren eines Leitungskreuzungsverhältnisses für die zweite Kreuzmatrix, wobei das Leitungskreuzungsverhältnis der zweiten Kreuzmatrix durch die folgende Formel berechnet wird:

$$[(k_3-1)\beta+k_1y+k_2+1, k_1\beta+k_2m_1+k_3].$$

8. Planungssystem, aufweisend:

eine erste Dienstzugriffseinheit, die zum Empfangen eines Dienstes konfiguriert ist;
eine Kreuzeinheit, die zum Planen des Dienstes konfiguriert ist, der durch die erste Dienstzugriffseinheit empfangen wird;
eine zweite Dienstzugriffseinheit, die zum Empfangen des Dienstes konfiguriert ist, der von der Kreuzeinheit geplant wird; und

**dadurch gekennzeichnet, dass** es des Weiteren aufweist:

die Planungsvorrichtung nach einem der Ansprüche 4 bis 7.

9. Planungssystem nach Anspruch 8, wobei die Planungsvorrichtung in die erste Dienstzugriffseinheit, die Kreuzeinheit oder die zweite Dienstzugriffseinheit integriert ist oder separat angeordnet ist.

**Revendications**

1. Procédé de programmation consistant à :

- définir (S201) une première matrice croisée entre une première unité d'accès de service et des unités croisées, et définir une seconde matrice croisée entre les unités croisées et une seconde unité d'accès de service ;

- **caractérisé en ce qu'**il consiste en outre à :

- configurer (S202) une relation croisée de ligne pour la première matrice croisée en fonction du nombre d'utilisation maximal d'unités croisées, du nombre d'utilisation réel des unités croisées et du nombre réel d'accès de service de la première unité d'accès de service ; et
- configurer (S203) une relation croisée de ligne de la seconde matrice croisée en fonction de la relation croisée de ligne de la première matrice croisée, la relation croisée de ligne de la seconde matrice croisée étant symétrique à la relation croisée de ligne de la première matrice croisée ;
- dans lequel, avant de configurer une relation croisée de ligne pour la première matrice croisée en fonction du nombre d'utilisation maximal d'unités croisées, du nombre d'utilisation réel des unités croisées et du nombre réel d'accès de service de la première unité d'accès de service, le procédé consiste en outre à :
- obtenir (S402) le nombre d'utilisation maximal des unités croisées, c'est-à-dire le nombre maximal d'accès de service de la première unité d'accès de service, en fonction d'une largeur de bande d'accès maximale de la première unité d'accès de service et d'une largeur de bande de programmation d'une seule unité croisée, dans lequel
- le nombre d'utilisation maximal des unités croisées, c'est-à-dire le nombre maximal d'accès de service de la première unité d'accès de service, est calculé par la formule suivante :
- $x = z/n$, où $x$ est le nombre d'utilisation maximal des unités croisées, c'est-à-dire le nombre maximal d'accès de service de la première unité d'accès de service, $z$ est la largeur de bande d'accès maximale de la première unité d'accès de service, et $n$ est la largeur de bande de programmation d'une seule unité croisée ; et
- définir $\beta$ lignes pour chaque unité croisée, dans lequel une largeur de bande de chaque ligne est $n/\beta$, et $\beta$ est un plus petit commun multiple de tous les nombres de 1 à $x$ ;

- dans lequel la configuration d'une relation croisée de ligne pour la première matrice croisée en fonction du nombre d'utilisation maximal et du nombre d'utilisation réel des unités croisées et du nombre réel d'accès de service de la première unité d'accès de service consiste à :

- configurer $m_2\beta$ groupes de relations croisées de lignes pour la première matrice croisée, dans lequel la relation croisée de ligne de la première matrice croisée est calculée par la formule suivante :
- $[k_1\beta + k_2m_1 + k_3, (k_3-1)\beta + k_1y + k_2 + 1]$, où $y = \beta/m_1$, $k_1 = 0,1...(m_2-1)$, $k_2 = 0,1...(y-1)$, $k_3 = 1,2...m_1$, et $m_1$ est le nombre d'utilisation réel des unités croisées et $m_2$ est le nombre réel d'accès de service de la première unité d'accès de service ; et
- la configuration d'une relation croisée de ligne pour la seconde matrice croisée consiste à calculer la relation croisée de ligne de la seconde matrice croisée avec la formule suivante :

$$[(k_3-1)\beta + k_1y + k_2 + 1, k_1\beta + k_2m_1 + k_3].$$

2. Procédé de programmation selon la revendication 1, dans lequel :

- si les largeurs de bande de lignes des unités croisées ne peuvent pas répondre à une exigence de programmation, le nombre de lignes des unités croisées est augmenté de manière à garantir qu'une largeur de bande de programmation de chaque unité croisée reste inchangée ; et
- un port de protection est configuré dans la première unité d'accès de service et une relation de correspondance du port de protection et d'un port original de la première unité d'accès de service est configurée.

3. Procédé de programmation selon les revendications 1 ou 2, dans lequel si une largeur de bande de service de ligne unique de la première unité d'accès de service a $\leq n/2$, $\lfloor n/a \rfloor$ lignes de service accèdent à une unité croisée pour configurer une relation croisée de ligne, où $\lfloor n/a \rfloor$ représente le nombre entier maximal qui est inférieur ou égal à $n/a$.

4. Appareil de programmation comprenant :

- un module de définition de matrice croisée (10) conçu pour définir une première matrice croisée entre une première unité d'accès de service et des unités croisées, et définir une seconde matrice croisée entre les unités croisées et une seconde unité d'accès de service ; et

- **caractérisé en ce qu'**il comprend en outre :

- un module de configuration de relation croisée (20) conçu pour configurer une relation croisée de ligne pour la première matrice croisée en fonction du nombre d'utilisation maximal d'unités croisées, du nombre d'utilisation réel des unités croisées et du nombre réel d'accès de service de la première unité d'accès de service ; et configurer une relation croisée de ligne de la seconde matrice croisée en fonction de la relation croisée de ligne de la première matrice croisée, la relation croisée de ligne de la seconde matrice croisée étant symétrique à la relation croisée de ligne de la première matrice croisée ;

- un module de configuration d'unité croisée (30) conçu pour obtenir le nombre d'utilisation maximal des unités croisées, c'est-à-dire le nombre maximal d'accès de service de la première unité d'accès de service, en fonction d'une largeur de bande d'accès maximale de la première unité d'accès de service et d'une largeur de bande de programmation d'une seule unité croisée, dans lequel

- le nombre d'utilisation maximal des unités croisées, c'est-à-dire le nombre maximal d'accès de service de la première unité d'accès de service, est calculé par la formule suivante :

- $x = z/n$, où $x$ est le nombre d'utilisation maximal des unités croisées, c'est-à-dire le nombre maximal d'accès de service de la première unité d'accès de service, $z$ est la largeur de bande d'accès maximale de la première unité d'accès de service, et $n$ est la largeur de bande de programmation d'une seule unité croisée ; et

- définir $\beta$ lignes pour chaque unité croisée, dans lequel une largeur de bande de chaque ligne est $n/\beta$, et $\beta$ est un plus petit commun multiple de tous les nombres de 1 à $x$ ;

- dans lequel le module de configuration de relation croisée est en outre configuré pour :

- configurer $m_2\beta$ groupes de relations croisées de lignes pour la première matrice croisée, dans lequel la relation croisée de ligne de la première matrice croisée est calculée par la formule suivante :

- $[k_1\beta + k_2m1 + k_3, (k_3-1)\beta + k_1y + k_2 + 1]$, où $y=\beta/m_1$, $k_1=0,1...(m_2-1)$, $k_2=0,1...(y-1)$, $k_3=1,2...m_1$, et $m_1$ est le nombre d'utilisation réel des unités croisées et $m_2$ est le nombre réel d'accès de service de la première unité d'accès de service ; et

- configurer une relation croisée de ligne pour la seconde matrice croisée, dans lequel

- la relation croisée de ligne de la seconde matrice croisée est calculée avec la formule suivante :

$$[(k_3-1)\beta + k_1y + k_2 + 1, k_1\beta + k_2m_1 + k_3].$$

5. Appareil de programmation selon la revendication 4, dans lequel le module de configuration d'unité croisée est en outre conçu pour :

- si les largeurs de bande de lignes des unités croisées ne peuvent pas répondre à une exigence de programmation, augmenter le nombre de lignes des unités croisées de manière à garantir qu'une largeur de bande de programmation de chaque unité croisée reste inchangée ; et

- l'appareil de programmation comprend en outre : un module de protection (40) conçu pour définir une ligne de protection dans la première unité d'accès de service, et configurer une relation de correspondance de la ligne de protection et d'une ligne originale de la première unité d'accès de service.

6. Appareil de programmation selon les revendications 4 ou 5, dans lequel le module de configuration de relation croisée est en outre conçu pour, si une largeur de bande de service de ligne unique de la première unité d'accès de service $a \leq n/2$, relier $\lfloor n/a\rfloor$ lignes de service à une unité croisée pour configurer une relation croisée de ligne, où $\lfloor n/a\rfloor$ représente le nombre entier maximal qui est inférieur ou égal à $n/a$.

7. Appareil de programmation comprenant :

- un processeur (50) et un stockage (60) mis en correspondance avec le processeur ;
- le stockage étant conçu pour stocker un programme exécuté par le processeur ; et
- le processeur étant conçu pour exécuter les étapes suivantes :
- définir une première matrice croisée entre une première unité d'accès de service et des unités croisées, et définir une seconde matrice croisée entre les unités croisées et une seconde unité d'accès de service ;

- **caractérisé en ce qu'**il comprend en outre :

- configurer une relation croisée de ligne pour la première matrice croisée en fonction du nombre d'utilisation maximal d'unités croisées, du nombre d'utilisation réel des unités croisées et du nombre réel d'accès de service de la première unité d'accès de service ; et
- configurer une relation croisée de ligne de la seconde matrice croisée en fonction de la relation croisée de ligne de la première matrice croisée, la relation croisée de ligne de la seconde matrice croisée étant symétrique à la relation croisée de ligne de la première matrice croisée ;

- dans lequel le processeur est en outre conçu pour :

- obtenir le nombre d'utilisation maximal des unités croisées, c'est-à-dire le nombre maximal d'accès de service de la première unité d'accès de service, en fonction d'une largeur de bande d'accès maximale de la première unité d'accès de service et d'une largeur de bande de programmation d'une seule unité croisée, dans lequel
- le nombre d'utilisation maximal des unités croisées, c'est-à-dire le nombre maximal d'accès de service de la première unité d'accès de service, est calculé par la formule suivante :
- $x = z/n$, où $x$ est le nombre d'utilisation maximal des unités croisées, c'est-à-dire le nombre maximal d'accès de service de la première unité d'accès de service, $z$ est la largeur de bande d'accès maximale de la première unité d'accès de service, et $n$ est la largeur de bande de programmation d'une seule unité croisée ; et
- définir $\beta$ lignes pour chaque unité croisée, dans lequel une largeur de bande de chaque ligne est $n/\beta$, et $\beta$ est un plus petit commun multiple de tous les nombres de 1 à $x$ ;

- dans lequel le processeur est en outre conçu pour :

- configurer $m_2\beta$ groupes de relations croisées de lignes pour la première matrice croisée, dans lequel la relation croisée de ligne de la première matrice croisée est calculée par la formule suivante :
- $[k_1\beta + k_2m_1 + k_3, (k_3-1)\beta + k_1y + k_2 + 1]$, où $y=\beta/m_1$, $k_1=0,1...(m_2-1)$, $k_2=0,1...(y-1)$, $k_3=1,2...m_1$, et $m_1$ est le nombre d'utilisation réel des unités croisées et $m_2$ est le nombre réel d'accès de service de la première unité d'accès de service ; et
- configurer une relation croisée de ligne pour la seconde matrice croisée,
- la relation croisée de ligne de la seconde matrice croisée étant calculée avec la formule suivante :

$$[(k_3-1)\beta + k_1y + k_2 + 1, k_1\beta + k_2m_1 + k_3].$$

8. Système de programmation comprenant :

- une première unité d'accès de service conçue pour recevoir un service ;
- une unité croisée conçue pour programmer le service reçu par la première unité d'accès de service ;
- une seconde unité d'accès de service conçue pour recevoir le service programmé par l'unité croisée ; et
- **caractérisé en ce qu'**il comprend en outre l'appareil de programmation selon l'une quelconque des revendications 4 à 7.

9. Système de programmation selon la revendication 8, dans lequel l'appareil de programmation est intégré dans la première unité d'accès de service, l'unité croisée, ou la seconde unité d'accès de service, ou est disposé séparément.

EP 2 753 097 B1

FIG. 1

```
Set a first cross matrix between a first service access unit
and cross units, and set a second cross matrix between the
cross units and a second service access unit
```
S201

↓

```
Configure a line cross relationship for the first cross matrix
according to the maximum use number and the actual use
number of the cross units and the actual number of service
accesses of the first service access unit
```
S202

↓

```
Configure a line cross relationship of the second cross
matrix according to the line cross relationship of the first
cross matrix, so that the line cross relationship of the
second cross matrix is symmetric to the line cross
relationship of the first cross matrix
```
S203

FIG. 2

```
Set a first cross matrix between a first service access unit
and cross units, and set a second cross matrix between the
cross units and a second service access unit
```
S401

↓

```
Obtain the maximum use number of the cross units, that is,
the maximum number of service accesses of the first
service access unit, according to a maximum access
bandwidth of the first service access unit and a scheduling
bandwidth of a single cross unit, so as to set the number of
lines and a line bandwidth for each cross unit
```
S402

↓

```
Configure a group line cross relationship for the first cross
matrix
```
S403

↓

```
Configure a group line cross relationship for the second
cross matrix
```
S404

↓

```
Set a protection port in the first service access unit, and
configure a correspondence relationship of the protection
port and an original port of the first service access unit
```
S405

FIG. 3

Set a first cross matrix between a first service access unit and cross units, and set a second cross matrix between the cross units and a second service access unit ⟋S401

Obtain the number of cross units that need to be configured, that is, the maximum number of service accesses of the first service access unit, according to a maximum access bandwidth of the first service access unit and a scheduling bandwidth of a single cross unit ⟋S402

Configure a group line cross relationship and a line fixed relationship for the first cross matrix ⟋S403

Configure a group line cross relationship and a line fixed relationship for the second cross matrix ⟋S404

Set a protection port in the first service access unit, and configure a correspondence relationship of the protection port and an original port of the first service access unit ⟋S405

FIG. 4

⟋10                                    ⟋20

| Cross matrix setting module | Cross relationship configuring module |

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005002276 A1
- US 7492760 B1